# EUROPÄISCHE PATENTSCHRIFT

(11) **EP 2 396 213 B1**
(45) Veröffentlichungstag und Bekanntmachung des Hinweises auf die Patenterteilung: **12.11.2014**
(21) Anmeldenummer: 09775708.2
(22) Anmeldetag: 12.02.2009
(51) Int. Cl.: B62D 12/00, B62D 53/02, E01C 19/26

(54) **GELENKANORDNUNG ZUM VERBINDEN ZWEIER FAHRZEUGTEILE ZU EINEM KNICKGELENKTEN FAHRZEUG**
HINGE ASSEMBLY FOR CONNECTING TWO VEHICLE PARTS TO A VEHICLE HAVING ARTICULATED FRAME STEERING
SYSTÈME D'ARTICULATION PERMETTANT DE RELIER DEUX PARTIES DE VÉHICULE EN UN VÉHICULE À DIRECTION PIVOTANTE PAR CHÂSSIS ARTICULÉ

(43) Veröffentlichungstag der Anmeldung: 21.12.2011
(73) Patentinhaber: Ammann Schweiz AG, 4900 Langenthal (CH)
(72) Erfinder: ANLIKER, Christoph, CH-4900 Langenthal (CH); GIOVANOLI, Lino, CH-7457 Bivio (CH)
(74) Vertreter: Münch, Martin Walter
(86) Internationale Anmeldenummer: PCT/CH2009/000061
(87) Internationale Veröffentlichungsnummer: WO 2010/091517

(56) Entgegenhaltungen:
- EP-A- 1 111 134
- DE-A1- 3 136 158
- US-B1- 6 345 932

## Beschreibung

### TECHNISCHES GEBIET

Die Erfindung betrifft eine Gelenkanordnung zum Verbinden zweier Fahrzeugteile zu einem hundegangfähigen, knickgelenkten Fahrzeug mit verschränkbaren Fahrzeugachsen sowie ein knickgelenktes Fahrzeug mit einer derartigen Gelenkanordnung gemäss den Oberbegriffen der unabhängigen Patentansprüche.

### STAND DER TECHNIK

Knickgelenkte Fahrzeuge kommen überwiegend als Bau- und Forstfahrzeuge zum Einsatz, bei denen es auf eine gute Wendigkeit auf kleinstem Raum ankommt. Bei solchen Fahrzeugen sind zwei jeweils eine Fahrzeugachse aufweisende Fahrzeugteile über ein Knickgelenk miteinander verbunden. Die Richtungsänderung erfolgt durch horizontales Verschwenken ("Knicken") der Fahrzeugteile mit den daran befindlichen Fahrzeugachsen relativ zueinander um das Gelenkzentrum des Knickgelenks herum, wodurch sich je nach Schwenkwinkel ein mehr oder weniger bogenförmiger Fahrkurs ergibt.

Ist bei solchen knickgelenkten Fahrzeugen wahlweise ein Betrieb mit in Fahrzeuglängsrichtung bzw. Fahrtrichtung gesehen zueinander versetzten Fahrzeugachsen gewünscht (sogenannter "Hundegang"), was insbesondere bei Strassenwalzen zur Asphaltverdichtung der Fall ist, so ist der Befestigungspunkt des Knickgelenks zumindest an einem der beiden Fahrzeugteile in horizontaler Richtung quer zur Fahrtrichtung verschiebbar ausgebildet, so dass das entsprechende Fahrzeugteil mit der daran befestigten Fahrzeugachse in horizontaler Richtung quer zur Fahrtrichtung gegenüber dem Knickgelenk verschoben werden kann. Als weitere Bauform ist es bekannt, zur Ermöglichung des Hundegangs ein Doppel-Knickgelenk zu verwenden. Solche Doppel-Knickgelenke bestehen aus zwei konventionellen Knickgelenken, von denen jedes mit einer seiner Gelenkhälften mit einem der beiden Fahrzeugteile verbunden ist und mit seiner anderen Gelenkhälfte mit einem Abstand mit dem jeweils anderen Knickgelenk. Ein derartiges Doppel-Knickgelenk ist in DE 31 36 158 A1 gezeigt.

Ist zusätzlich zur Hundegangfähigkeit eine Verschränkbarkeit der Fahrzeugachsen relativ zueinander gewünscht, also eine Verdrehung derselben relativ zueinander um eine in Fahrzeuglängsrichtung bzw. Fahrtrichtung verlaufende Drehachse herum, was insbesondere bei Fahrzeugen mit grosser Spur- bzw. Bandagenbreite der Fall ist, so ist gemäss dem Stand der Technik das Knick- bzw. Doppelknickgelenk mit einem der beiden Fahrzeugteile über eine zusätzliche Gelenkverbindung verbunden, welche eine Verdrehung zwischen diesem Fahrzeugteil und dem Knick- bzw. Doppelknickgelenk um eine in Fahrzeuglängsrichtung verlaufende Drehachse herum erlaubt.

Die heute bekannten Fahrzeuge, welche sowohl einen Betrieb im Hundegang als auch eine Verschränkung der Fahrzeugachsen zulassen, weisen jedoch gegenüber einfachen knick- bzw. doppelknickgelenkten Fahrzeugen den Nachteil auf, dass sie zusätzlich zum eigentlichen Knick- bzw. Doppelknickgelenk weitere bewegliche Anordnungen benötigen, was zu höheren Herstellungs- und Unterhaltskosten und zwangsläufig auch zu einer grösseren Fahrzeuglänge mit einer entsprechenden Einbusse bei der Wendigkeit führt.

EP 1 111 134 A2 offenbart eine Strassenwalze mit einem Dreipunkt-Pendelknickgelenk, welches eine Verschränkung der Fahrzeugachsen über dieses Gelenk zulässt, jedoch keinen Hundegang.

### DARSTELLUNG DER ERFINDUNG

Es stellt sich deshalb die Aufgabe, ein hundegangfähiges, knickgelenktes Fahrzeug mit verschränkbaren Fahrzeugachsen sowie eine Gelenkanordnung zur Bildung eines solchen Fahrzeugs durch Verbinden zweier jeweils eine Fahrzeugachse aufweisende Fahrzeugteile mit der Gelenkanordnung zur Verfügung zu stellen, welche die Nachteile des Standes der Technik nicht aufweisen oder zumindest teilweise vermeiden.

Diese Aufgabe wird durch die Gelenkanordnung und das knickgelenkte Fahrzeug gemäss den unabhängigen Patentansprüchen gelöst.

Ein ersten Aspekt der Erfindung betrifft eine Gelenkanordnung, mittels welcher zwei Fahrzeugteile, welche jeweils eine insbesondere starr mit dem jeweiligen Fahrzeugteil verbundene Fahrzeugachse umfassen, zu einem hundegangfähigen, knickgelenkten Fahrzeug mit gegeneinander verschränkbaren Fahrzeugachsen verbunden werden können. Wie bereits eingangs erwähnt wurde, wird unter "Hundegang" ein Betriebsmodus verstanden, in welchem das Fahrzeug mit in Fahrzeuglängsrichtung bzw. Fahrtrichtung gesehen seitlich zueinander versetzten Fahrzeugachsen betrieben wird. Unter einer Verschränkbarkeit der Fahrzeugachsen gegeneinander wird die Möglichkeit verstanden, dass sich die Fahrzeugachsen relativ zueinander um eine in Fahrzeuglängsrichtung bzw. Fahrtrichtung verlaufende Achse herum verdrehen können.

Das erfindungsgemässe Gelenk umfasst vier Strukturelemente, welche über vier Gelenkverbindungen miteinander verbunden sind, wobei jedes der Strukturelemente genau zwei der Gelenkverbindungen miteinander verbindet. Die Strukturelemente können ausschliesslich als jeweils starre Strukturelemente ausgebildet sein, d.h. derart, dass das jeweilige Strukturelement die beiden über dieses miteinander verbundenen Gelenkverbindungen starr mit einem festen Abstand zueinander verbindet (z.B. starre Rohr-, Profil-, oder Gehäuseelemente), oder können teilweise auch als dimensionsveränderliche Strukturelemente ausgebildet sein, derart, dass das betroffene Strukturelement die beiden über dieses miteinander verbundenen Gelenkverbindungen mit einem durch gezielte Einstellung oder als Funktion einer einwirkenden Kraft veränderbaren Abstand zueinander verbindet (z.B. längenverstellbare Stützen oder aus der Fahrzeugtechnik bekannte knicksteife Feder/Dämpfer-Stützelemente).

Dabei ist die Verbindung der Strukturelemente über die Gelenkverbindungen weiter derartig ausgebildet, dass die Strukturelemente zusammen mit den diese verbindenden Gelenkverbindungen in einem Grundzustand, in welchem die Gelenkzentren der Gelenkverbindungen gemeinsam in einer Ebenen liegen und dadurch anspruchsgemäss eine Ebene definieren, einen geschlossenen, entlang dieser Ebene im Wesentlichen schubsteifen Rahmen bilden. Der Begriff "Gelenkzentrum" bezeichnet hier bezogen auf ein Kugelgelenk das Kugelzentrum des Kugelgelenk und bezogen auf ein Drehgelenk die Drehachse des Drehgelenks. Unter einem im Wesentlichen schubsteifen Rahmen wird hier ein Rahmen verstanden, welcher aufgrund seiner konstruktiven Ausgestaltung in der zuvor erwähnten Ebene entweder vollständig winkelsteif ist, oder lediglich im Rahmen einer belastungsabhängigen, konstruktiv vorgesehenen Dimensionsveränderbarkeit eines Strukturelements winkelveränderlich ist, z.B. in dem Fall, dass eines der Strukturelemente zwischen zwei Gelenkverbindungen als knicksteifes Feder-Dämpfer-Stützelement ausgebildet ist.

Dabei sind zwei der Strukturelemente, welche zwei sich gegenüberliegende Seiten des schubsteifen Rahmens bilden, jeweils in den beiden Gelenkverbindungen, welches das jeweilige Strukturelement miteinander verbindet, um eine Drehachse herum gegenüber den zwei übrigen Strukturelementen und dem jeweiligen anderen verdrehbaren Strukturelement verdrehbar. Die Drehachsen liegen dabei im Grundzustand jeweils in der von den Gelenkzentren definierten Ebene.

Des Weiteren ist eines der beiden zuvor erwähnten verdrehbaren Strukturelemente zusammen mit einem der beiden zuvor erwähnten übrigen (nicht verdrehbaren) Strukturelemente, mit welchen es jeweils über eine der Gelenkverbindungen direkt verbunden ist, ausgehend von dem Grundzustand, in welchem die Gelenkzentren der Gelenkverbindungen in einer gemeinsamen Ebene liegen, derartig gegenüber den anderen zwei Strukturelementen, d.h. gegenüber dem anderen verdrehbaren Strukturelement und dem anderen übrigen Strukturelement, verschwenkbar, dass das Gelenkzentrum der diese beiden verschwenkbaren Strukturelemente verbindenden Gelenkverbindung zu beiden Seiten aus der von den Gelenkzentren im Grundzustand definierten Ebene herausgeschwenkt werden kann, ohne dass dabei die Gelenkzentren der anderen drei Gelenkverbindungen diese Ebene verlassen müssen. Hierdurch ergibt sich die Möglichkeit einer Verschränkung der Drehachsen der beiden verdrehbaren Strukturelemente relativ zueinander.

Mit anderen Worten gesagt betrifft also der erste Aspekt der Erfindung eine Gelenkanordnung zum Verbinden zweier Fahrzeugteile zu einem hundegangfähigen, knickgelenkten Fahrzeug mit verschränkbaren Fahrzeugachsen, umfassend vier Strukturelemente, welche über vier Gelenkverbindungen, deren Gelenkzentren in einem Grundzustand in einer gemeinsamen Ebene angeordnet sind, derartig miteinander verbunden sind, dass sie einen in dieser Ebene schubsteifen Rahmen bilden. Dabei sind zwei der Strukturelemente, welche sich gegenüberliegende Seiten des schubsteifen Rahmens bilden, in den Gelenkverbindungen jeweils um eine in dieser Ebene liegende Drehachse herum gegenüber den jeweils anderen drei Strukturelementen verdrehbar. Zudem sind die Gelenkverbindungen derartig ausgebildet, dass diese beiden Drehachsen ausgehend von dem Grundzustand zueinander verschränkt werden können, indem eine der Drehachsen aus der Ebene herausgeschwenkt werden kann.

Mit der erfindungsgemässen Gelenkanordnung lässt sich ohne weitere bewegliche Anordnungen wie Drehgelenke und querverschiebbare Anschlusselemente zusammen mit zwei Fahrzeugteilen mit Fahrzeugachsen ein hundegangfähiges, knickgelenktes Fahrzeug mit verschränkbaren Fahrzeugachsen bilden, indem die beiden verdrehbaren Strukturelemente der Gelenkanordnung jeweils mit einem der beiden Fahrzeugteile verbunden werden. Hierdurch wird es möglich, derartige Fahrzeuge relativ kostengünstig zur Verfügung zu stellen und zu unterhalten. Auch wird hierdurch eine besonders kompakte Bauweise derartiger Fahrzeuge ermöglicht.

In einer bevorzugten Ausführungsform der Gelenkanordnung sind zwischen zweien der Strukturelemente Anschlagmittel angeordnet, welche die Herausschwenkbarkeit des Gelenkzentrums der die beiden verschwenkbaren Strukturelemente verbindenden Gelenkverbindung aus der im Grundzustand durch die Gelenkzentren definierten Ebene heraus begrenzen und damit auch die Verschränkbarkeit der Drehachsen der verdrehbaren Strukturelemente relativ zueinander. Dieses ist sinnvoll, um Betriebszustände mit einer übermässigen Verschränkung dieser Drehachsen zu vermeiden, da mit zunehmender Verschränkung die Schubsteifigkeit des durch die Strukturelemente und die Gelenkverbindungen gebildeten Rahmens in einer Richtung, welche in der durch die Gelenkzentren im Grundzustand gebildeten Ebene verläuft, abnimmt.

Bevorzugterweise erfolgt dabei die zuvor erwähnte Begrenzung der Herausschwenkbarkeit symmetrisch um diese Ebene herum, so dass eine Verschränkung der Drehachsen der verdrehbaren Strukturelemente zueinander in gleichem Masse in beide Verschränkungsrichtungen begrenzt wird.

Auch ist es dabei bevorzugt, dass die Anschlagmittel zwischen zwei Strukturelementen angeordnet sind, welche über eine der Gelenkverbindungen direkt miteinander verbunden sind. Auf diese Weise lässt sich eine direkt wirkende, robuste Begrenzung der Verschränkbarkeit der Drehachsen der verdrehbaren Strukturelemente zueinander realisieren.

In einer weiteren bevorzugten Ausführungsform der Gelenkanordnung sind zwischen jedem der beiden verdrehbaren Strukturelemente und einem der zwei übrigen Strukturelemente jeweils Einstellmittel angeordnet, zur Einstellung und Arretierung eines bestimmten Verdrehwinkels des jeweiligen verdrehbaren Strukturelements relativ zu den zwei übrigen (nicht verdrehbaren) Strukturelementen und dem jeweiligen anderen verdrehbaren Strukturelement. Hierdurch ist es möglich, die Verdrehung jedes der beiden verdrehbaren Strukturelemente gegenüber den beiden übrigen Strukturelementen individuell einzustellen und dadurch jeweils die Lenkung eines mit dieser Gelenkanordnung gebildeten knickgelenkten Fahrzeugs zu bewerkstelligen. Zur Einstellung eines bestimmten Versatzes im Hundegang müssen bei dieser Ausführungsform die an beiden verdrehbaren Strukturelementen angreifenden Einstellmittel in koordinierter Art und Weise eingestellt werden. Geeignete Einstellmittel sind beispielweise hydraulische Kolben-Zylinder-Anordnungen oder elektrische Spindeltriebe.

In einer anderen, zur vorangehenden bevorzugten Ausführungsform alternativen bevorzugten Ausführungsform der Gelenkanordnung sind zwischen einem der beiden verdrehbaren Strukturelemente und einem der zwei übrigen (nicht verdrehbaren) Strukturelemente Einstellmittel angeordnet, zur Einstellung und Arretierung eines bestimmten Verdrehwinkels dieses verdrehbaren Strukturelements relativ zu den zwei übrigen Strukturelementen. Des Weiteren sind zwischen den beiden verdrehbaren Strukturelementen Einstellmittel angeordnet, zur Einstellung und Arretierung eines bestimmten Verdrehwinkels der beiden verdrehbaren Strukturelemente relativ zueinander. Hierdurch ist es möglich, bei einem mit dieser Gelenkanordnung gebildeten knickgelenkten Fahrzeug die Lenkung und die Einstellung des Versatzes im Hundegang praktisch unabhängig voneinander zu bewerkstelligen. Mittels der zwischen den beiden verdrehbaren Strukturelementen angeordneten Einstellmittel lässt sich der Lenkwinkel des Fahrzeugs einstellen, ohne dass hierdurch ein etwaiger Hundegangversatz wesentlich verändert wird und mittels der zwischen einem der beiden verdrehbaren Strukturelemente und einem der zwei übrigen (nicht verdrehbaren) Strukturelemente angeordneten Einstellmittel kann ein Hundegangversatz eingestellt werden, ohne dass hierbei der gerade eingestellte Lenkwinkel wesentlich verändert wird. Auch hier sind hydraulische Kolben-Zylinder-Anordnungen oder elektrische Spindeltriebe Beispiele für geeignete Einstellmittel.

Dabei ist es bei den beiden zuvor erwähnten alternativen bevorzugten Ausführungsformen der Gelenkanordnung bevorzugt, dass keine Einstellmittel an demjenigen der zwei übrigen Strukturelemente angreifen, welches zur Ermöglichung einer Verschränkung der Drehachsen der beiden verdrehbaren Strukturelemente relativ zueinander zusammen mit einem der beiden verdrehbaren Strukturelemente derartig verschwenkbar ist, dass das Gelenkzentrum der diese beiden Strukturelemente verbindenden Gelenkverbindung aus der von den Gelenkzentren im Grundzustand definierten Ebene herausgeschwenkt wird. Dies ist sinnvoll, um eine Einschränkung der Verschränkbarkeit durch die Einstellmittel zu verhindern.

Weiter ist es bei den zuvor beschriebenen bevorzugten Ausführungsformen der Gelenkanordnung mit Einstellmitteln bevorzugt, dass zumindest ein Teil der Anlenkungspunkte der Einstellmittel an den Strukturelementen als Kreuzgelenk ausgebildet ist und nicht als Kugelgelenk, was ansonsten vorgesehen ist, da sich hierdurch besonders kompakte Gelenkanordnung mit einem relativ geringen Abstand zwischen den Drehachsen der beiden verdrehbaren Strukturelemente realisieren lassen.

In noch einer weiteren bevorzugten Ausführungsform der Gelenkanordnung sind die vier Strukturelemente über drei als Kugelgelenke ausgebildete Gelenkverbindungen und eine weitere Gelenkverbindung, welche die Schubsteifigkeit des durch die Strukturelemente und die Gelenkverbindungen gebildeten Rahmens gewährleistet, miteinander verbunden.

Dabei ist es weiter bevorzugt, dass diese weitere Gelenkverbindung derartig ausgebildet ist, dass sie als einzigen Freiheitsgrad eine Verdrehbewegung der mit dieser verbundenen Strukturelemente relativ zueinander um eine Drehachse herum zulässt, welche in der im Grundzustand durch die Gelenkzentren der Gelenkverbindungen definierten Ebene verläuft. Eine derartige Ausbildung der Gelenkverbindungen ist kostengünstig und robust.

In noch einer weiteren bevorzugten Ausführungsform der Gelenkanordnung verlaufen im Grundzustand die Drehachsen der beiden verdrehbaren Strukturelemente in der durch die Gelenkzentren definierten Ebene parallel zueinander, in einer anderen bevorzugten Ausführungsform nicht-parallel zueinander. Je nach Verwendung der Gelenkanordnung kann die eine oder die andere Ausführungsform bevorzugter sein. So ergibt sich beispielsweise bei parallel verlaufenden Drehachsen ein eher neutrales Lenkverhalten eines mit der Gelenkanordnung gebildeten knickgelenkten Fahrzeugs, während hingegen eine gezielte nicht-parallele Anordnung der Drehachsen eine spezifische Lenkcharakteristik bewirken kann, z.B. einen stabilen Geradeauslauf in Folge von durch die Lage der Drehachsen bei Auslenkung aus dem Grundzustand erzeugten Rückstellkräften.

Dabei ist es bei beiden Ausführungsalternativen in einer bevorzugten Ausführungsvariante vorgesehen, dass die (parallele oder nicht-parallele) Lage, welche die Drehachsen der beiden verdrehbaren Strukturelemente im Grundzustand zueinander in der von den Gelenkzentren gebildeten Ebene aufweisen, veränderbar ist.

Dabei ist es weiter bevorzugt, dass die Lage der Drehachsen dadurch veränderbar ist, dass der Abstand zweier Gelenkverbindungen zueinander, welche jeweils einer anderen der beiden Drehachsen der beiden verdrehbaren Strukturelemente zugeordnet sind, einstellbar ist, z.B. indem das Strukturelement, welches diese beiden Gelenkverbindungen miteinander verbindet, als längeneinstellbare Pendelstütze ausgebildet ist. Hierdurch lässt sich das Lenkverhalten eines mit der Gelenkanordnung gebildeten knickgelenkten Fahrzeugs massgeblich verändern bzw. an bestimmte Bedürfnisse anpassen.

Auch ist es dabei bevorzugt, dass die Lage der Drehachsen dadurch veränderbar ist, dass der Abstand zweier Gelenkverbindungen zueinander, welche jeweils einer anderen der beiden Drehachsen der verdrehbaren Strukturelemente zugeordnet sind, in Abhängigkeit von einer Zug- und/oder Druckbelastung entlang der im Grundzustand durch die Gelenkverbindungen definierten Ebene veränderbar ist, bevorzugterweise entgegen einer Federkraft, welche bei Entlastung eine Rückstellung bewirkt. Um eine solche Ausführungsform zu realisieren, könnte das Strukturelement, welches diese beiden Gelenkverbindungen miteinander verbindet, beispielsweise als knicksteifes Feder-Dämpfer-Stütze ausgebildet sein. Auch ist es denkbar, zusätzlich eine grundsätzliche Einstellbarkeit wie zuvor dargelegt vorzusehen, durch welche der Abstand der beiden Gelenkverbindungen zueinander im unbelasteten Zustand eingestellt werden kann, und damit die Lage der Drehachsen zueinander im unbelasteten Zustand.

Ein zweiter Aspekt der Erfindung betrifft ein knickgelenktes Fahrzeug mit zwei jeweils eine Fahrzeugachse aufweisenden Fahrzeugteilen, welche über eine Gelenkanordnung gemäss dem ersten Aspekt der Erfindung knickgelenkig miteinander verbunden sind, indem jedes der beiden Fahrzeugteile mit einem der beiden verdrehbaren Strukturelemente der Gelenkanordnung verbunden ist. Die Bildung eines derartigen Fahrzeugs stellt eine bevorzugte Verwendung der erfindungsgemässen Gelenkanordnung dar.

Bevorzugterweise handelt es sich bei dem knickgelenkten Fahrzeug um eine Tandemwalze zur Asphaltverdichtung, mit zwei glatten Bandagen, mit einer Gummiradachse und einer glatten Bandage oder mit zwei Gummiradachsen. Bei solchen Fahrzeugen treten die Vorteile der Erfindung besonders deutlich zu Tage.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
die Figuren 1 und 2 perspektivische Draufsichten von schräg oben aus zwei verschiedenen Richtungen auf eine erfindungsgemässe Gelenkanordnung;
Fig. 3 eine Seitenansicht der Gelenkanordnung aus den Figuren 1 und 2;
Fig. 4 eine Draufsicht auf die Gelenkanordnung aus den Figuren 1 und 2;
Fig. 5 einen Vertikalschnitt durch die Gelenkanordnung aus den Figuren 1 und 2 entlang der Linie A-A in Fig. 4;
Fig. 6 eine perspektivische Ansicht von schräg unten eines erfindungsgemässes knickgelenktes Fahrzeugs;
Fig. 7 eine Seitenansicht des Fahrzeugs aus Fig. 6;
Fig. 8 eine Draufsicht auf das Fahrzeug aus Fig. 6;
die Figuren 9a und 9b Ansichten des Fahrzeugs aus Fig. 6 bei Geradeauslauf von unten, einmal ohne und einmal mit Bandagenversatz;
die Figuren 10a und 10b Ansichten des Fahrzeugs aus Fig. 6 von vorne, einmal ohne und einmal mit Bandagenversatz;
die Figuren 11a und 11b Ansichten des Fahrzeugs aus Fig. 6 bei Kurvenfahrt von unten, einmal ohne und einmal mit Bandagenversatz; und
Fig. 12 eine perspektivische Draufsicht von schräg oben auf eine Ausführungsvariante der Gelenkanordnung aus Fig. 1.

### WEGE ZUR AUSFÜHRUNG DER ERFINDUNG

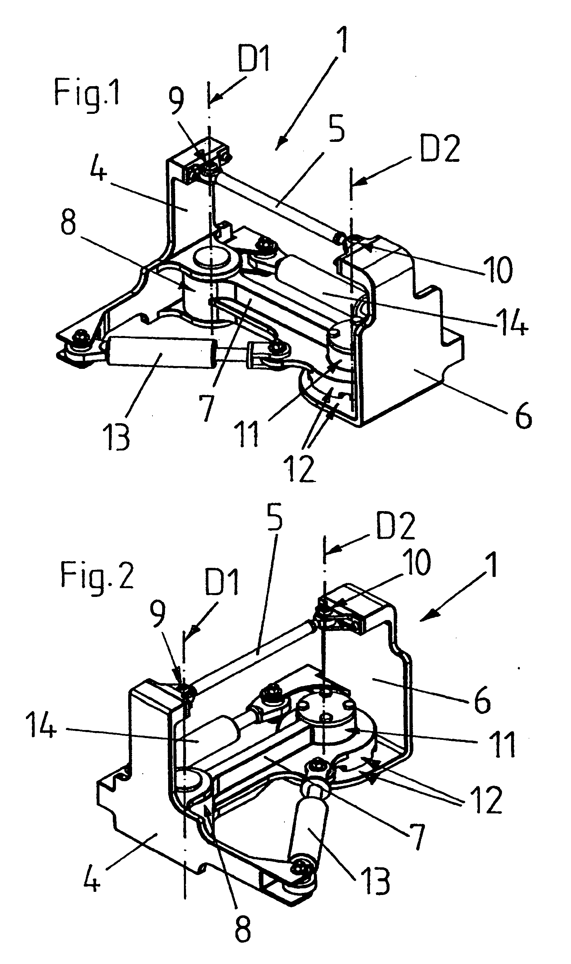

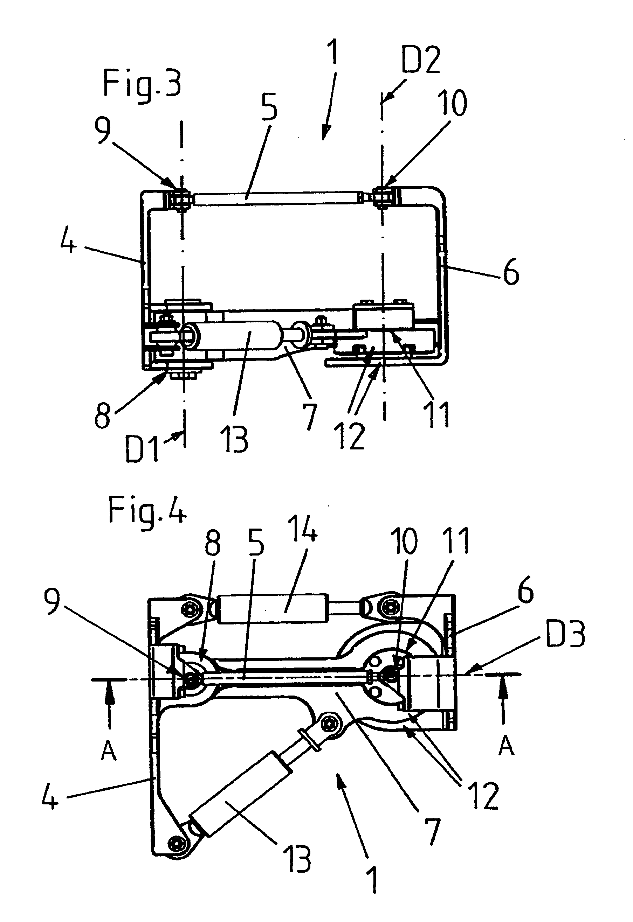

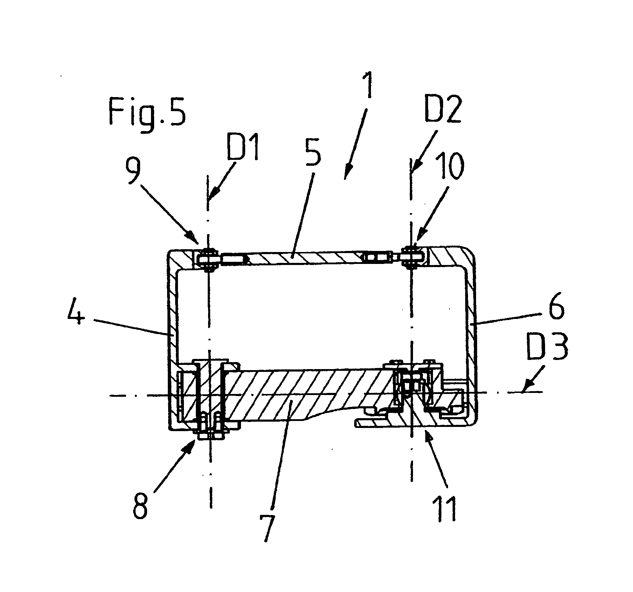

Die Figuren 1 bis 5 zeigen eine bevorzugte Ausführungsform einer erfindungsgemässen Gelenkanordnung 1, einmal in einer perspektivischen Draufsicht von schräg oben von einer ersten Seite (Fig. 1), einmal in einer perspektivischen Draufsicht von schräg oben von einer zweiten Seite (Fig. 2), einmal in einer Seitenansicht von der zweiten Seite (Fig. 3), einmal in einer Draufsicht (Fig. 4) und einmal im Vertikalschnitt entlang der Linie A-A in Fig. 4 (Fig. 5).

Wie zu erkennen ist, weist die Gelenkanordnung vier starre Strukturelemente 4, 5, 6, 7 auf, von denen zwei als vertikale Anschlussplatten 4, 6 für ein vorderes und ein hinteres Fahrzeugteil (nicht gezeigt) ausgebildet sind, eines als horizontaler Schwenkarm 7 und eines als horizontale Pendelstütze 5. Die Strukturelemente 4, 5, 6, 7 sind über vier Gelenkverbindungen 8, 9, 10, 11 miteinander verbunden, wobei die Gelenkzentren der Gelenkverbindungen 8, 9, 10, 11 in dem in den Figuren dargestellten Grundzustand gemeinsam eine Ebene definieren. Diese Ebene ist identisch mit einem Vertikalschnitt durch die Gelenkanordnung 1 entlang der Linie A-A in Fig. 4. Drei der Gelenkverbindungen sind als Kugelgelenke 9, 10, 11 ausgebildet, während die vierte Gelenkverbindung als ein Drehgelenk 8 ausgebildet ist, welches als einzigen Freiheitsgrad eine Verdrehbewegung des über dieses mit einer der beiden Anschlussplatte 4 verbundenen horizontalen Schwenkarms 7 relativ zu dieser Anschlussplatte 4 um eine vertikale Drehachse D1 herum zulässt. Diese Drehachse D1 liegt in der im Grundzustand von den Gelenkzentren definierten Ebene und verläuft dabei durch das Gelenkzentrum des vertikal darüber angeordneten Kugelgelenks 9.

Auf diese Weise bilden die beiden Anschlussplatten 4, 6, die Pendelstütze 5 und der Schwenkarm 7 zusammen mit den drei Kugelgelenken 9, 10, 11 und dem Drehgelenk 8 einen geschlossenen, entlang der von den Gelenkzentren definierten Ebene schubsteifen Rahmen. Dabei ist eine Verdrehung der beiden Anschlussplatten 4, 6 gegenüber dem Schwenkarm 7 und gegenüber der Pendelstütze 5 in den Gelenken 8, 9, 10, 11 jeweils um eine vertikale Drehachse D1, D2 herum möglich.

Zudem kann die in der Seitenansicht in Fig. 3 rechts dargestellte Anschlussplatte 6 zusammen mit der Pendelstütze 5, mit welcher sie über das Kugelgelenk 10 direkt verbunden ist, ausgehend von dem dargestellten Grundzustand derartig gegenüber der anderen Anschlussplatte 4 und dem horizontalen Schwenkarm 7 verschwenkt werden, dass das Gelenkzentrum des Kugelgelenks 10 zu beiden Seiten aus der von den Gelenkzentren im Grundzustand definierten Ebene heraustreten kann, ohne dass die Gelenkzentren der anderen drei Gelenkverbindungen 8, 9, 11 diese Ebene verlassen. Hierdurch wird eine Verdrehung der Drehachsen D1, D2 der beiden Anschlussplatten 4, 6 relativ zueinander im Wesentlichen um eine horizontale Drehachse D3 herum möglich, welche auch als Verschränkung der Drehachsen D1, D2 zueinander bezeichnet wird.

Diese Verschränkung wird dadurch formschlüssig begrenzt, dass der horizontale Schwenkarm 7 an seiner Unterseite im Bereich um das Kugelgelenk 11 herum ein flanschartiges Anschlagelement 12 aufweist, welches im Grundzustand einem Anschlagelement 12 der Anschlussplatte 6 mit einem geringfügigen gleichmässigen Abstand gegenüberliegt und bei einer Verschwenkung der Anschlussplatte 6 gegenüber dem Schwenkarm 7 um das Gelenkzentrum des Kugelgelenks 11 herum bei einem bestimmten Schwenkwinkel am Anschlagelement 12 der Anschlussplatte 6 anschlägt. Dabei ist der mögliche Schwenkwinkel für beide Schwenkseiten identisch.

Wie weiter zu erkennen ist, ist zwischen der in Fig. 3 links dargestellten Anschlussplatte 4 und dem horizontalen Schwenkarm 7 eine hydraulische Kolben-Zylinder-Einheit 13 angeordnet, mittels welcher ein bestimmter Verdrehwinkel dieser Anschlussplatte 4 um die Drehachse D1 herum relativ zu der Pendelstütze 5 und dem Schwenkarm 7 eingestellt und arretiert werden kann. Zudem ist eine weitere hydraulische Kolben-Zylinder-Einheit 14 zwischen den beiden Anschlussplatte 4, 6 angeordnet, mittels welcher ein bestimmter Verdrehwinkel der beiden Anschlussplatten 4, 6 relativ zueinander eingestellt und arretiert werden kann, unter einer etwaigen Verdrehung der Anschlussplatte 6 relativ zu dem Schwenkarm 7 und der Pendelstütze 5 um die Drehachse D2 herum.

Wie aus Fig. 5 ersichtlich ist, welche einen Vertikalschnitt durch die Gelenkanordnung im Grundzustand entlang der Linie A-A in Fig. 4 zeigt, liegen die Drehachsen D1, D2 der beiden Anschlussplatten 4, 6 im Grundzustand parallel zueinander in der durch die Gelenkzentren definierten Ebene.

Auch wenn es sich bei den Strukturelementen 4, 5, 6, 7 der in den Figuren 1 bis 5 dargestellten erfindungsgemässen Gelenkanordnung 1 ausschliesslich um starre, geometrisch unveränderbare Strukturelemente handelt, ist es in weiteren bevorzugten Varianten dieser Ausführungsform vorgesehen, einzelne dieser Strukturelemente derartig auszubilden, dass die Lage, welche die Drehachsen D1, D2 der beiden Anschlussplatten 4, 6 im Grundzustand relativ zueinander in der von den Gelenkzentren gebildeten Ebene aufweisen, veränderbar ist. Dies kann beispielsweise dadurch erfolgen, dass der Schwenkarm 7 und/oder die Pendelstütze 5 längeneinstellbar ausgebildet wird oder dass die Pendelstütze 5 als eine in Abhängigkeit von einer Zug-Druck-Belastung längenveränderliche Federstütze ausgebildet wird.

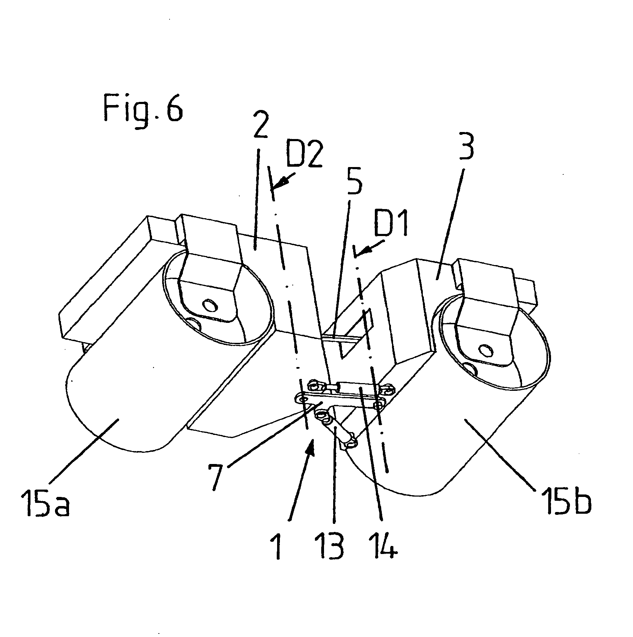

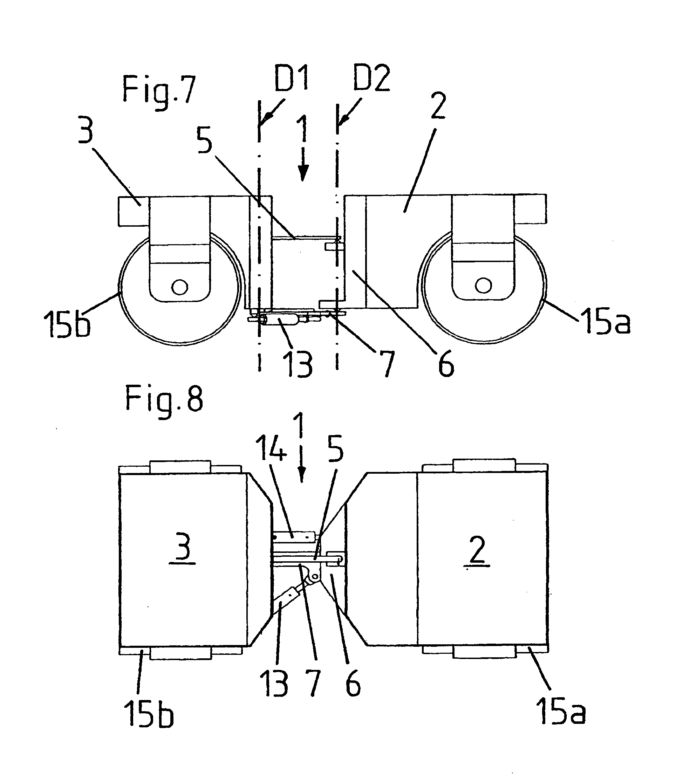

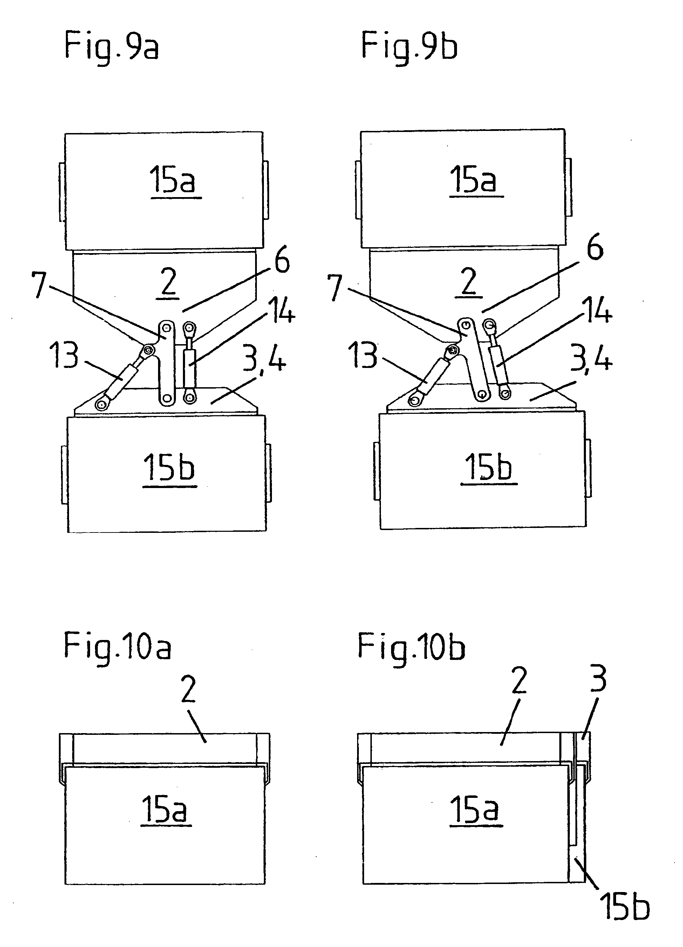

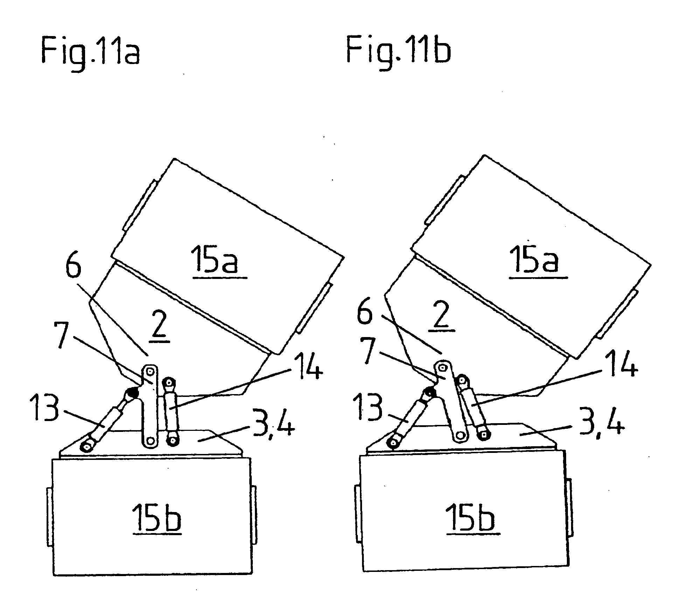

Die Figuren 6 bis 11b zeigen ein erfindungsgemässes knickgelenktes Fahrzeug, einmal in perspektivischer Ansicht von schräg unten (Fig. 6), einmal in der Seitenansicht (Fig. 7), einmal in der Draufsicht (Fig. 8), von unten bei Geradeauslauf einmal ohne (Fig. 9a) und einmal mit Bandagenversatz (Fig. 9b), von vorne bei Geradeauslauf einmal ohne (Fig. 10a) und einmal mit Bandagenversatz (Fig. 10b) und von unten bei Kurvenfahrt einmal ohne (Fig. 11a) und einmal mit Bandagenversatz (Fig. 11b).

Wie zu erkennen ist, besteht das erfindungsgemässe knickgelenkte Fahrzeug aus zwei je eine starre Fahrzeugachse mit einer glatten Bandage 15a, 15b aufweisenden Fahrzeugteilen 2, 3, welche über eine erfindungsgemässe Gelenkanordnung 1, welche bis auf geringfügige bauliche Abweichungen identisch mit derjenigen aus den Figuren 1 bis 5 ist, knickgelenkig zu einer Tandemwalze miteinander verbunden sind. Dabei stellt jedes der beiden Fahrzeugteile 2, 3 jeweils eine der beiden Anschlussplatten 4, 6 der Gelenkanordnung 1 zur Verfügung. Die Bezugsziffern in den Figuren 6 bis 11b sind identisch mit denjenigen in den Figuren 1 bis 5 für jeweils funktionsgleiche Bauteile bzw. Drehachsen der Gelenkanordnung 1.

Wie aus den Figuren 9a bis 10b hervorgeht, lässt sich ausgehend von der in den Figuren 9a und 10a dargestellten Situation, in welcher die Walze bei Geradeauslauf ohne Versatz der Bandagen 15a, 15b betrieben wird, durch Verkürzung oder Verlängerung der hydraulischen Kolben-Zylinder-Einheit 13 praktisch ohne Fahrtrichtungsänderung in Fahrtrichtung gesehen ein Versatz der beiden Fahrzeugteile 2, 3 zueinander und damit der Bandagen 15a. 15b zueinander einstellen, welcher auch als "Hundegangversatz" bezeichnet wird.

Die Einstellung der Fahrtrichtung der Walze erfolgt mittels der hydraulischen Kolben-Zylinder-Einheit 14 praktisch ohne Einfluss auf einen etwaigen Bandagenversatz.

Wie weiter aus den Figuren 11a und 11b hervorgeht, lässt sich der "Hundegang" auch bei Kurvenfahrt, z.B. ausgehend von der in den Figuren 11a dargestellten Situation in welcher die Walze ohne Bandagenversatz betrieben wird, durch Verkürzung oder Verlängerung der hydraulischen Kolben-Zylinder-Einheit 13 wiederum praktisch ohne Veränderung der Fahrtrichtung einstellen.

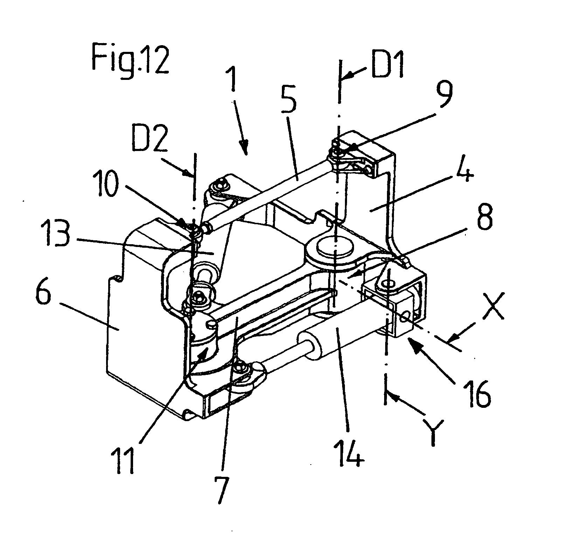

Fig. 12 zeigt eine perspektivische Draufsicht von schräg oben auf eine erfindungsgemässe Gelenkanordnung, welche sich von der Gelenkanordnung gemäss Fig. 1 lediglich dadurch unterscheidet, dass der Zylinder der hydraulischen Kolben-Zylinder-Einheit 14, welche zwischen den vertikalen Anschlussplatten 4, 6 angeordnet ist, an der Anschlussplatte 4 mit einem Kreuzgelenk 16 angelenkt ist und nicht, wie in Fig. 1, mit einem Kugelgelenk. Das Kreuzgelenk 16 weist zwei senkrecht zueinander verlaufende Drehachsen X, Y auf, welche sich im Zentrum des Gelenks 16 schneiden.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Gelenkanordnung (1) zum Verbinden zweier, Fahrzeugachsen aufweisender Fahrzeugteile (2, 3) zu einem hundegangfähigen, knickgelenkten Fahrzeug mit verschränkbaren Fahrzeugachsen, umfassend vier Strukturelemente (4, 5, 6, 7), welche über vier Gelenkverbindungen (8, 9, 10, 11) derartig miteinander verbunden sind,
dass sie in einem Grundzustand, in welchem die Gelenkzentren der Gelenkverbindungen (8, 9, 10, 11) gemeinsam eine Ebene definieren, zusammen einen geschlossenen, entlang dieser Ebene im Wesentlichen schubsteifen Rahmen bilden, wobei zwei der Strukturelemente (4, 6), welche zwei sich gegenüberliegende Seiten des schubsteifen Rahmens bilden, jeweils in zwei der Gelenkverbindungen (8, 9; 10, 11) um eine Drehachse (D1, D2) herum, welche im Grundzustand in der von den Gelenkzentren definierten Ebene liegt, gegenüber den übrigen Strukturelementen (5, 7) verdrehbar sind,
**dadurch gekennzeichnet, dass** die vier Strukturelemente (4, 5, 6, 7) über die vier Gelenkverbindungen (8, 9, 10, 11) zudem derartig miteinander verbunden sind, dass eines (4) dieser beiden verdrehbaren Strukturelemente (4, 6) zusammen mit einem (5) der zwei übrigen Strukturelemente (5, 7), mit welchen es über eine (10) der Gelenkverbindungen (8, 9, 10, 11) direkt verbunden ist, ausgehend von dem Grundzustand derartig gegenüber den anderen zwei Strukturelementen (4, 7) verschwenkbar ist, dass das Gelenkzentrum der diese beiden verschwenkbaren Strukturelemente (4, 5) verbindenden Gelenkverbindung (10) zu beiden Seiten aus der von den Gelenkzentren im Grundzustand definierten Ebene herausgeschwenkt werden kann, während die Gelenkzentren der anderen drei Gelenkverbindungen (8, 9, 11) in dieser Ebene verbleiben, zur Ermöglichung einer Verschränkung der Drehachsen (D1, D2) der beiden verdrehbaren Strukturelemente (4, 6) relativ zueinander.

2. Gelenkanordnung (1) nach Anspruch 1, wobei zwischen zweien (6, 7) der Strukturelemente (4, 5, 6, 7) Anschlagmittel (12) gebildet sind, durch welche die Herausschwenkbarkeit des Gelenkzentrums der die beiden verschwenkbaren Strukturelemente (5, 6) verbindenden Gelenkverbindung (10) aus der im Grundzustand durch die Gelenkzentren gebildeten Ebene begrenzt ist, insbesondere symmetrisch um diese Ebene herum.

3. Gelenkanordnung (1) nach Anspruch 2, wobei die Anschlagmittel (12) zwischen zwei Strukturelementen (6, 7) gebildet sind, welche über eine (11) der Gelenkverbindungen (8, 9, 10, 11) direkt miteinander verbunden sind.

4. Gelenkanordnung (1) nach einem der vorangehenden Ansprüche, wobei zwischen jedem der beiden verdrehbaren Strukturelemente (4, 6) und einem der zwei übrigen Strukturelemente (5, 7) jeweils Einstellmittel angeordnet sind, zur Einstellung und Arretierung eines bestimmten Verdrehwinkels des jeweiligen verdrehbaren Strukturelements (4; 6) relativ zu den zwei übrigen Strukturelementen (5, 7) und dem jeweiligen anderen verdrehbaren Strukturelement (6; 4).

5. Gelenkanordnung (1) nach einem der Ansprüche 1 bis 3, wobei zwischen einem (4) der beiden verdrehbaren Strukturelemente (4, 6) und einem (7) der zwei übrigen Strukturelemente (5, 7) Einstellmittel (13) angeordnet sind, zur Einstellung und Arretierung eines bestimmten Verdrehwinkels dieses verdrehbaren Strukturelements (4) relativ zu den zwei übrigen Strukturelementen (5, 7),
und wobei zwischen den beiden verdrehbaren Strukturelementen (4, 6) Einstellmittel (14) angeordnet sind, zur Einstellung und Arretierung eines bestimmten Verdrehwinkels der beiden verdrehbaren Strukturelemente (4, 6) relativ zueinander.

6. Gelenkanordnung (1) nach einem der Ansprüche 4 bis 5, wobei keine der Einstellmittel (13) an demjenigen (5) der zwei übrigen Strukturelemente (5, 7) angreifen, welches zur Ermöglichung einer Verschränkung der Drehachsen (D1, D2) der beiden verdrehbaren Strukturelemente (4, 6) relativ zueinander zusammen mit einem (6) der beiden verdrehbaren Strukturelemente (4, 6) verschwenkbar ist.

7. Gelenkanordnung nach einem der Ansprüche 4 bis 6, wobei zumindest ein Teil der Anlenkungspunkte der Einstellmittel (13, 14) an den Strukturelementen (4, 5, 6, 7) als Kreuzgelenk ausgebildet ist.

8. Gelenkanordnung (1) nach einem der vorangehenden Ansprüche, wobei die vier Strukturelemente (4, 5, 6, 7) über drei als Kugelgelenke ausgebildeten Gelenkverbindungen (9, 10, 11) und eine weitere Gelenkverbindung (8), welche die Schubsteifigkeit des durch die Strukturelemente (4, 5, 6, 7) und die Gelenkverbindungen (8, 9, 10, 11) gebildeten Rahmens gewährleistet, verbunden sind.

9. Gelenkanordnung (1) nach Anspruch 8, wobei die weitere Gelenkverbindung (8) derartig ausgebildet ist, dass sie als einzigen Freiheitsgrad eine Verdrehbewegung der mit dieser verbundenen Strukturelemente (4, 7) relativ zueinander um eine der besagten Drehachsen (D1) herum ermöglicht, welche in der im Grundzustand durch die Gelenkzentren definierten Ebene verläuft.

10. Gelenkanordnung (1) nach einem der vorangehenden Ansprüche, wobei im Grundzustand die Drehachsen (D1, D2) der beiden verdrehbaren Strukturelemente (4, 6) parallel zueinander in der durch die Gelenkzentren definierten Ebene verlaufen.

11. Gelenkanordnung (1) nach einem der Ansprüche 1 bis 9, wobei im Grundzustand die Drehachsen (D1, D2) der beiden verdrehbaren Strukturelemente (4, 6) nicht-parallel zueinander in der durch die Gelenkzentren definierten Ebene verlaufen.

12. Gelenkanordnung (1) nach einem der Ansprüche 10 bis 11, wobei die Lage, welche die Drehachsen (D1, D2) der beiden verdrehbaren Strukturelemente (4, 6) im Grundzustand relativ zueinander in der von den Gelenkzentren gebildeten Ebene aufweisen, veränderbar ist.

13. Gelenkanordnung (1) nach Anspruch 12, wobei die Lage der Drehachsen (D1, D2) dadurch veränderbar ist, dass der Abstand zweier Gelenkverbindungen zueinander, welche jeweils einer anderen der beiden Drehachsen (D1, D2) zugeordnet sind, einstellbar ist.

14. Gelenkanordnung (1) nach einem der Ansprüche 12 bis 13, wobei die Lage der Drehachsen (D1, D2) relativ zueinander dadurch veränderbar ist, dass der Abstand zweier der Gelenkverbindungen (8, 9, 10, 11) zueinander, welche jeweils einer anderen der beide Drehachsen (D1, D2) zugeordnet sind, in Abhängigkeit von einer Zug- und/oder Druckbelastung entlang der im Grundzustand durch die Gelenkzentren der Gelenkverbindungen (8, 9, 10, 11) definierten Ebene veränderbar ist, insbesondere entgegen einer Federkraft, welche bei Entlastung eine Rückstellung bewirkt.

15. Knickgelenktes Fahrzeug mit zwei jeweils eine Fahrzeugachse aufweisenden Fahrzeugteilen (2, 3), welche über eine Gelenkanordnung (1) nach einem der vorangehenden Ansprüche knickgelenkig miteinander verbunden sind, indem jedes der beiden Fahrzeugteile (2, 3) mit einem der beiden verdrehbaren Strukturelemente (4, 6) der Gelenkanordnung verbunden ist oder eines dieser Strukturelemente (4, 6) bildet.

16. Fahrzeug nach Anspruch 15, wobei das Fahrzeug eine Tandemwalze zur Asphaltverdichtung ist, mit zwei glatten Bandagen (15a, 15b), mit einer Gummiradachse und einer glatten Bandage oder mit zwei Gummiradachsen.

## Claims

1. Hinge assembly (1) for connecting two vehicle parts (2, 3) having vehicle axles to a vehicle that is capable of crab steering, has articulated frame steering and comprises articulating vehicle axles, comprising four structural elements (4, 5, 6, 7), which are connected to each other by four hinge connections (8, 9, 10, 11) in such a manner
that in a basic state, in which the hinge centers of the hinge connections (8, 9, 10, 11) define a common plane, they altogether form a closed frame which is substantially rigid with respect to thrust forces acting along that plane, wherein two of the structural elements (4, 6) which are forming two opposing sides of the frame which is substantially rigid with respect to thrust forces, in each case can be rotated with respect to the remaining structural elements (5, 7) in two of the hinge connections (8, 9; 10, 11) about a rotational axis (D1, D2) which in the basic state is located in the plane defined by the hinge centers
**characterized in that** the four structure elements (4, 5, 6, 7) are interconnected via the four hinge connections (8, 9, 10, 11) in such a way that one (4) of these two structural elements (4, 6) which can be rotated, together with one (5) of the two remaining structural elements (5, 7) to which it is directly connected by one (10) of the hinge connections (8, 9, 10, 11), can be tilted starting from the basic state with respect to the other two structural elements (4, 7) in such a manner that the hinge center of the hinge connection (10), which connects said two tiltable structural elements (4, 5), can be pivoted to both sides out of the plane defined by the hinge centers in the basic state, while the hinge centers of the other three hinge connections (8, 9, 11) stay in this plane, for permitting an articulation of the rotational axis (D1, D2) of the two structural elements (4, 6) which can be rotated relative to each other.

2. Hinge assembly (1) according to claim 1, wherein between two (6, 7) of the structural elements (4, 5, 6, 7) stop means (12) are formed, by which the ability of the hinge center of the hinge connection (10) which is connecting the two tiltable structural elements (4, 5) to be pivoted out of the plane formed by the hinge centers in the basic state is limited, in particular symmetrically around this plane.

3. Hinge assembly (1) according to claim 2, wherein the stop means (12) are formed between two structural elements (6, 7) which are directly connected with each other by one (11) of the hinge connections (8, 9, 10, 11).

4. Hinge assembly (1) according to one of the preceding claims, wherein in each case adjustment means are arranged between each of the two structural elements (4, 6) which can be rotated and one of the two remaining structural elements (5, 7), for setting and locking of a specific rotation angle of the respective structural element (4; 6) which can be rotated relative to the two remaining structural elements (5, 7) and the respective other structural element (6; 4) which can be rotated.

5. Hinge assembly (1) according to one of the claims 1 to 3, wherein adjustment means (13) are arranged between one (4) of the two structural elements (4, 6) which can be rotated and one (7) of the two remaining structural elements (5, 7), for setting and locking of a specific rotation angle of said structural element (4) which can be rotated relative to the two remaining structural elements (5, 7),
and wherein adjustment means (14) are arranged between the two structural elements (4, 6) which can be rotated, for setting and locking of a specific rotation angle of the two structural elements (4, 6) which can be rotated relative to each other.

6. Hinge assembly (1) according to one of the claims 4 to 5, wherein none of the adjustment means (13) are arranged at those (5) of the two remaining structural elements (5, 7) which, for permitting an articulation of the rotational axes (D1, D2) of the two structural elements (4, 6) which can be rotated relative to each other, can be tilted together with one (6) of the two structural elements (4, 6) which can be rotated.

7. Hinge assembly according to one of the claims 4 to 6, wherein at least a part of the linkage points of the adjustment means (13, 14) at the structural elements (4, 5, 6, 7) is designed as a cardan joint.

8. Hinge assembly (1) according to one of the preceding claims, wherein the four structural elements (4, 5, 6, 7) are connected by three hinge connections (9, 10, 11) designed as ball joints and by one further hinge connection (8), which ensures the rigidity with respect to thrust forces of the frame formed by the structural elements (4, 5, 6, 7) and the hinge connections (8, 9, 10, 11).

9. Hinge assembly (1) according to claim 8, wherein the further hinge connection (8) is designed in such a manner that as sole degree of freedom it permits a rotation of the structural elements (4, 7) connected by it relative to each other about a rotational axis (D1) which runs in the plane that is in the basic state defined by the hinge centers.

10. Hinge assembly (1) according to one of the preceding claims, wherein in the basic state the rotational axes (D1, D2) of the two structural elements (4, 6) which can be rotated run parallel to each other in the plane defined by the hinge centers.

11. Hinge assembly (1) according to one of the claims 1 to 9, wherein in the basic state the rotational axes (D1, D2) of the two structural elements (4, 6) which can be rotated run non-parallel to each other in the plane defined be the hinge centers.

12. Hinge assembly (1) according to one of the claims 10 to 11, wherein the position, at which the rotational axes (D1, D2) of the two structural elements (4, 6) which can be rotated in the basic state run relative to each other in the plane formed by the hinge centers, can be changed.

13. Hinge assembly (1) according to claim 12, wherein the position of the rotational axes (D1, D2) can be changed in that the distance of two hinge connections relative to each other, which in each case are dedicated to another of the two rotational axes (D1, D2), is adjustable.

14. Hinge assembly (1) according to one of the claims 12 to 13, wherein the position of the rotational axes (D1, D2) relative to each other can be changed in that the distance of two hinge connections relative to each other, which in each case are dedicated to another of the two rotational axes (D1, D2), is adjustable in dependency on the tensile and/or thrust forces acting along the plane defined in the basic state by the hinge centers of the hinge connections (8, 9, 10, 11), in particular against a spring force, which in case of release effects a resetting.

15. Vehicle with articulated frame steering having two vehicle parts (2, 3) comprising in each case a vehicle axle, which are connected with each other in an articulated frame steering manner by a hinge assembly (1) according to one of the preceding claims, in a way that each of the two vehicle parts (2, 3) is connected with one of the two structural elements (4, 6) of the hinge assembly, which can be rotated, or forms one of these structural elements (4, 6).

16. Vehicle according to claim 15, wherein the vehicle is a tandem roller for compacting asphalt, with two plain rolls (15a, 15b), with one rubber wheel axle and one plain roll or with two rubber wheel axles.

## Revendications

1. Assemblage à articulations (1) pour connecter deux parties de véhicule (2, 3) avec des axes de véhicule à un véhicule capable de marche en crabe et qui a une direction articulée et comprend des axes de véhicule articulés, comprenant quatre éléments de structure (4, 5, 6, 7) connectés l'un avec l'autre par quatre connexions articulées (8, 9, 10, 11) de sorte que
dans un état de base, dans lequel les centres d'articulation des connexions articulées (8, 9, 10, 11) définissent un plan commun, forment un cadre fermé essentiellement rigide par rapport à des forces de poussée qui actionnent le long dudit plan, deux des éléments de structure (4, 6) formant deux côtés opposés du cadre essentiellement rigide par rapport aux forces de poussée pouvant être chacun pivoté par rapport aux autres éléments de structure (5, 7) dans deux des connexions articulées (8, 9 ; 10, 11) autour d'un axe (D1, D2) situé dans le plan défini par les centres d'articulation, dans l'état de base,
**caractérisé en ce que** les quatre éléments de structure (4, 5, 6, 7) sont interconnectés par les quatre connexions articulées (8, 9, 10, 11) de sorte qu'un des deux éléments de structure (4, 6) pivotables, ensemble avec un (5) des deux autres éléments de structure (5, 7) avec lequel il est connecté directement par une (10) des connexions articulées (8, 9, 10, 11), peut être incliné à partir de l'état de base, par rapport aux autres deux éléments de structure (4, 7), de sorte que le centre d'articulation de la connexion articulée (10) qui connecte les deux éléments de structure (4, 5) inclinables peut être pivoté des deux côtés hors du plan défini par les centres d'articulation dans l'état de base, alors que les centres d'articulation des autres trois connexions articulées (8, 9, 11) restent dans ledit plan, afin de permettre une articulation de l'axe de rotation (D1, D2) des deux éléments de structure (4, 6) pivotables l'un par rapport à l'autre.

2. Assemblage à articulations (1) selon la revendication 1, des moyens d'arrêtage (12) étant formés entre deux (6, 7) des éléments de structure (4, 5, 6, 7), à l'aide desquels la capacité du centre d'articulation de la connexion articulée (10) connectant les deux éléments de structure pivotables (4, 5), d'être pivotés hors du plan formé par les centres d'articulation dans l'état de base est limitée, particulièrement de manière symétrique autour dudit plan.

3. Assemblage à articulations (1) selon la revendication 2, les moyens d'arrêtage (12) étant formés entre deux éléments de structure (6, 7) directement connectés l'un avec l'autre par une (11) des connexions articulées (8, 9, 10, 11).

4. Assemblage à articulations (1) selon l'une des revendications précédentes, des moyens d'ajustage étant arrangés entre chacun des éléments de structure (4, 6) pivotables et un des deux autres éléments de structure (5, 7), afin d'ajuster et de fixer un angle de rotation spécifique de l'élément de structure respectif (4 ; 6) qui est pivotable par rapport aux deux autres éléments de structure (5, 7) et respectivement l'autre élément de structure (6 ; 4) pivotable.

5. Assemblage à articulations (1) selon les revendications 1 à 3, des moyens d'ajustage étant arrangés entre un (4) des deux éléments de structure (4, 6) pivotables et un (7) des deux autres éléments de structure (5, 7), afin d'ajuster et de fixer un angle de rotation spécifique de l'élément de structure respectif (4) qui est pivotable par rapport aux deux autres éléments de structure (5, 7),
et des moyens d'ajustage (14) étant arrangés entre les deux éléments de structure (4, 6) pivotables, afin d'ajuster et de fixer un angle de rotation spécifique des deux éléments de structure (4, 6) qui sont pivotables l'un par rapport à l'autre.

6. Assemblage à articulations (1) selon l'une des revendications 4 à 5, aucun des moyens d'ajustage (13) étant arrangé aux autres éléments de structure (5, 7), tels qui peuvent être inclinés ensemble avec un (6) des éléments de structure (4, 6) pivotables, afin de permettre une articulation de l'axe de rotation (D1, D2) des deux éléments de structure (4, 6) qui sont pivotables l'un par rapport à l'autre.

7. Assemblage à articulations (1) selon l'une des revendications 4 à 6, au moins une partie des points d'articulation des moyens d'ajustage (13, 14) aux éléments de structure (4, 5, 6, 7) étant conçues comme joint de cardan.

8. Assemblage à articulations (1) selon l'une des revendications précédentes, les quatre éléments de structure (4, 5, 6, 7) étant connectés par trois connexions articulées (9, 10, 11) conçues comme des joint à bille et par une autre connexion articulée (8), assurant la rigidité par rapport à des forces de poussée du cadre formé par les éléments de structure (4, 5, 6, 7) et les connexion articulées (8, 9, 10, 11).

9. Assemblage à articulations (1) selon la revendication 8, l'autre connexion articulée (8) étant conçue de sorte qu'elle permet une rotation des éléments de structure (4, 7) connectés par elle-même, comme seul degré de liberté, l'un par rapport à l'autre autour d'un axe de rotation (D1) qui s'étend dans le plan défini par les centres d'articulation dans l'état de base.

10. Assemblage à articulations (1) selon l'une des revendications précédentes, les axes de rotation (D1, D2) des deux éléments de structure (4, 6) qui sont pivotables s'étendant de manière parallèle l'un par rapport à l'autre dans le plan défini par les centres d'articulation dans l'état de base.

11. Assemblage à articulations (1) selon l'une des revendications 1 à 9, les axes de rotation (D1, D2) des deux éléments de structure (4, 6) qui sont pivotables s'étendant de manière non-parallèle l'un par rapport à l'autre dans le plan défini par les centres d'articulation dans l'état de base.

12. Assemblage à articulations (1) selon l'une des revendications 10 à 11, la position, dans laquelle les axes de rotation (D1, D2) des deux éléments de structure (4, 6) pivotables dans l'état de base s'étendent l'un par rapport à l'autre dans le plan formé par les centres d'articulation, pouvant être changée.

13. Assemblage à articulations (1) selon la revendication 12, la position des axes de rotation (D1, D2) pouvant être changée de sorte que la distance des deux connexions d'articulation l'une par rapport à l'autre, qui sont dédiées à un autre axe de rotation (D1, D2), soit ajustable.

14. Assemblage à articulations (1) selon l'une des revendications 12 à 13, la position des axes de rotation (D1, D2) pouvant être changée de sorte que la distance des deux connexions d'articulation l'une par rapport à l'autre, qui sont dédiées à un autre axe de rotation (D1, D2), soit ajustable dépendant des forces de poussée et/ou de traction actionnant le long du plan défini dans l'état de base par les centres d'articulation des connexions d'articulation (8, 9, 10, 11), particulièrement contre une force de ressort, résultant en un rappel en cas de relâche.

15. Véhicule à direction articulée avec deux parties de véhicules (2, 3) comprenant chacune des axes de véhicule connectées l'un à l'autre par un assemblage à articulations (1) selon l'une des revendications précédentes de manière dirigée par des articulations, de sorte que chacune des deux parties de véhicule (2, 3) soit connectée avec un des deux éléments de structure (4, 6) pivotables de l'assemblage à articulations ou forme un desdits éléments de structure (4, 6).

16. Véhicule selon la revendication 15, le véhicule étant un rouleau en tandem pour compacter de l'asphalte, avec deux rouleaux simples (15a, 15b) avec un axe de roue gommée et un rouleau simple ou avec deux axes de roue gommées.
